# EUROPEAN PATENT APPLICATION

(11) **EP 4 180 509 A1**
(43) Date of publication of application: **17.05.2023**
(21) Application number: 21838018.6
(22) Date of filing: 07.05.2021
(51) Int. Cl.: C11D 3/50, C11D 3/43, C11D 11/00, D06F 43/08, C11D 7/50

(54) **GREEN SOLVENT, LAUNDRY COMPOSITION COMPRISING SAME, AND WASHING MACHINE**

(30) Priority: 08.07.2020 KR 20200084365; 23.09.2020 KR 20200123128
(71) Applicant: LG Household & Health Care Ltd., Seoul 03184 (KR)
(72) Inventor: SON, Seong Kil, Seoul 07795 (KR); KANG, Nae Gyu, Seoul 07795 (KR); KIM, Young Min, Seoul 07795 (KR); OH, Kwang Ho, Seoul 07795 (KR)
(74) Representative: Goddar, Heinz J.
(86) International application number: PCT/KR2021/005724
(87) International publication number: WO 2022/010082

(57) **Abstract**

A laundry composition according to the present disclosure includes a solvent selected from the group consisting of solketal and derivatives thereof and a fragrance, wherein the fragrance has a log P value of -1.0 to 4.5, and a washing machine includes a washing unit configured to receive a solvent to wash accommodated fibers; a steam collector configured to condense a gaseous phase discharged from the washing unit and supply the same to a solvent collector; and the solvent collector configured to collect a liquid phase discharged from the washing unit and supply the solvent to a solvent supplier, wherein the solvent collector includes a filter unit configured to remove foreign substances from the solvent supplied from at least one of the steam collector and the washing unit; and a solvent storage configured to store the solvent supplied from the filter unit.

## Description

### Technical Field

The present disclosure relates to a green solvent, a laundry composition including the same, and a washing machine using the same, and more particularly, to a laundry composition capable of reducing formation of wrinkles on fibers by further including a specific fragrance in a solvent including solketal, and a washing machine which enables reuse of the solvent by preventing decomposition of the solvent.

### Background Art

In general, laundry for removing contaminants on fibers or clothes may be classified into removal of contaminants by dispersing a surfactant in water or dry cleaning for removing contaminants by dissolving the same in a solvent. The laundry method using water and the surfactant is effective in removing water-based contaminants, but there is a limit in removing oil-based contaminants. Dry cleaning is suitable for washing fibers or clothes that are not suitable for washing processes with strong dehydration processes involved, and is suitable for removing oil-based contaminants using organic solvents.

Petroleum-based or chlorine-based solvents have been mostly used for conventional dry cleaning. As the petroleum-based solvent, hydrocarbons having 10 or more carbon atoms, more specifically, hydrocarbons having 10 to 13 carbon atoms are used. The petroleum-based solvents have excellent cleaning power against oil-based contaminants and the advantage of being easy to dry due to high volatility, but they have a low boiling point and high vapor pressure to cause fire and explosion, with a limit in that they may cause environmental pollution due to VOC when discharged to the outside. Used as the chlorine-based solvent is a compound such as PERC, in which two double-bonded carbons and four chlorines are bonded. The chlorine-based solvents show excellent cleaning power against oil-based contaminants, high volatility, and low risk of explosion, but were found to be toxic substances that may cause cancer in the human body. The use of petroleum-based and chlorine-based solvents is being gradually restricted.

In order to solve the disadvantages of these conventional solvents, various solvents such as glycol ether-based solvents, bromine-containing solvents, and silicone oil-containing solvents have been developed, and alternatives such as dry cleaning methods using liquefied carbon dioxide as well as wet cleaning methods for removing contaminants using only a small amount of water are also proposed.

However, glycol ether-based solvents have attracted attention as they have excellent cleaning power compared to petroleum-based hydrocarbon solvents, but have disadvantages in that they take a long time in drying due to relatively low volatility and consume a lot of energy required for drying. Bromine-containing solvents have the advantage of being non-flammable by including N-propylbromide or 1-bromopropane, but when discharged to the environment, they cause environmental pollution, contact irritation to the human body, or serious diseases when inhaled for a long time. It was assumed that silicone oil causes cancer according to recent results of animal experiments, so regulations on the use thereof have been established. The dry cleaning method using liquefied carbon dioxide requires expensive equipment as carbon dioxide is liquefied using a high pressure of 600 psi or higher with a risk of explosion, and wet cleaning accompanies with shrinkage and deformation of fibers due to water.

Recently, a solvent including a compound represented by Chemical Formula 1 has been proposed for laundry of fibers, and it has been found that the solvent is advantageous in that it is safe for the human body and the environment and has excellent cleaning power against contaminants and a low risk of explosion while being quick and easy to dry.

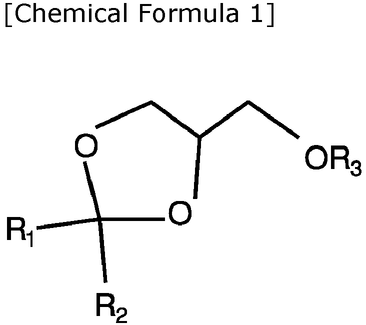

In the Formula,
R₁ and R₂ are each independently hydrogen or a linear or branched alkyl having 1 to 4 carbon atoms, and
R₃ is hydrogen or a linear or branched alkyl having 1 to 4 carbon atoms.

In the Formula,
R₁ and R₂ are each independently a linear or branched alkyl having 2 to 4 carbon atoms, and may be connected to each other to form a cycloalkyl.

It has been found that the compound of Chemical Formula 1 has a property of being soluble in water, unlike solvents including petroleum-based and chlorine-based solvents or silicone oil, and thus is suitable not only for dry cleaning but also for cleaning using water.

However, though the solvent of Chemical Formula 1 is relatively small compared to the petroleum-based and chlorine-based solvents, there has been a problem that it still leaves a specific odor on the fibers after washing. In addition, when the compound of Chemical Formula 1 is exposed to acidic conditions as water is used in the washing process or mixed with water contained in the fiber, the compound is decomposed into glycerol and acetone, making it difficult to reuse through collection.

### [Prior Art Document]

### [Patent Document]

(Patent Document 1) Korean Patent No. 10-1128856 (published on March 14, 2012)
(Patent Document 2) Korean Patent Application Publication No. 10-2014-0073597 (published on June 17, 2014)
(Patent Document 3) Korean Patent Application Publication No. 10-2017-0082444 (published on July 14, 2017)

### Disclosure of the Invention

### Technical Goals

The present disclosure has been proposed to solve the problems of a laundry composition including the compound of Chemical Formula 1 as a solvent, and an object of the present disclosure is to provide a laundry composition capable of reducing the specific odor of the compound of Chemical Formula 1 and reducing formation of wrinkles in the fibers after washing by adding a fragrance having a specific log P value to a laundry composition.

The present disclosure has been proposed to solve the problems of washing using the compound of Chemical Formula 1 as a solvent, and another object of the present disclosure is to provide a washing machine that may prevent decomposition of the compound and enable reuse of a solvent by collecting used solvents to eliminate moisture from the solvent.

### Technical Solutions

A laundry composition according to Example 1 of the present disclosure includes a solvent represented by the following Chemical Formula 1 and a fragrance, wherein the fragrance has a log P value of - 1.0 to 4.5.

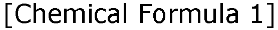

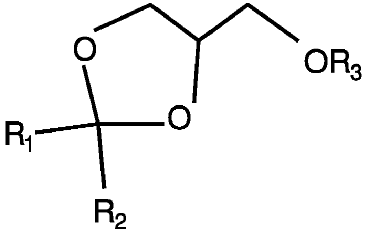

In the Formula,
R₁ and R₂ are each independently hydrogen or a linear or branched alkyl having 1 to 4 carbon atoms, and
R₃ is hydrogen or alkyl having 1 to 4 carbon atoms.

Specifically, in the Chemical Formula 1, R₁ and R₂ are each independently a linear or branched alkyl having 2 to 4 carbon atoms, and may be connected to each other to form a cycloalkyl.

Specifically, in the Chemical Formula 1, R₁ and R₂ may be methyl, and R₃ may be hydrogen.

Specifically, the fragrance may include one or more compounds selected from the group consisting of vanillin, resorcinol, 2,4-dihydroxy-3,6-dimethylbenzoic acid, geraniol, benzylbenzoate, and 2-ethylhexene.

Specifically, the fragrance may be included in an amount of 0.0001 to 30 wt% with respect to 100 wt% of the laundry composition.

Specifically, the laundry composition may be a liquid composition further including one or more additives selected from the group consisting of an organic solvent, a surfactant, an electrolyte, an enzyme, a preservative, and a viscosity modifier.

In addition, the present disclosure provides a method of washing fibers using the laundry composition according to Example 1.

A washing machine according to Example 2 of the present disclosure includes a washing unit supplied with a solvent and configured to wash fibers accommodated therein, a steam collector configured to condense a gaseous phase discharged from the washing unit and supply it to a solvent collector, and the solvent collector configured to collect a liquid phase discharged from the washing unit and supply it to a solvent supplier, wherein the solvent collector includes a filter unit configured to remove foreign substances from the solvent supplied from at least one of the steam collector and the washing unit, and a solvent storage configured to store the solvent supplied from the filter unit.

Specifically, the steam collector may include a steam suction unit configured to collect steam generated in the washing unit, and a steam condenser configured to perform heat exchange between steam and water supplied from the steam suction unit.

Specifically, the solvent storage may include a solvent storage tank configured to supply the solvent to the solvent supplier, and a sensor unit configured to measure the content of moisture contained in the solvent storage tank.

Specifically, the solvent storage tank may include an adsorption cartridge detachably disposed inside the solvent storage tank, and the adsorption cartridge may include at least one or more of activated carbon, charcoal, silica gel, alumina gel, sulfuric acid, activated clay, zeolite and bentonite.

Specifically, the sensor unit may be configured to measure the moisture content in the solvent storage tank using at least one of electrical conductivity, pH concentration, color, viscosity, and infrared rays.

Specifically, the solvent collector may further include a moisture eliminator having a permeable membrane, wherein the permeable membrane may be a permeable evaporation membrane, a hollow fiber membrane, or a reverse osmosis membrane, and the moisture eliminator may be configured to supply the solvent that passed through the permeable membrane to the solvent supplier or the solvent storage.

Specifically, the moisture eliminator may include an adsorption cartridge detachably disposed inside the moisture eliminator, and the adsorption cartridge may be disposed to be in contact with the solvent that passed through the permeable membrane.

Specifically, the moisture eliminator may include a second sensor unit configured to measure the content of moisture contained in the moisture eliminator.

Specifically, the washing machine may further include a solvent return line configured to supply the solvent stored in the solvent storage tank to the moisture eliminator, a solvent return valve provided on the solvent return line to control a supply flow rate of the solvent, and a controller configured to adjust a degree of opening of the solvent return valve according to the moisture content measured by at least one of the sensor unit and the second sensor unit.

Specifically, the controller may be configured to open the solvent return valve or increase the degree of opening thereof when the moisture content measured by the sensor unit is greater than a predetermined first reference value or the moisture content measured by the second sensor unit is less than a predetermined second reference value.

Specifically, the solvent
may include a compound represented by the following Chemical Formula 1.

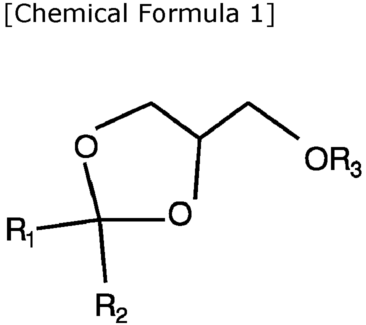

In the Formula,
R₁ and R₂ are each independently hydrogen or a linear or branched alkyl having 1 to 4 carbon atoms, and
R₃ is hydrogen or a linear or branched alkyl having 1 to 4 carbon atoms.

Specifically, in the compound, R₁ and R₂ are each independently a linear or branched alkyl having 2 to 4 carbon atoms, and may be connected to each other to form a cycloalkyl.

### Advantageous Effects

A laundry composition according to the present disclosure may use, as a solvent, solketal and derivatives thereof which are environmentally friendly and safe to the human body compared to petroleum-based and chlorine-based solvents, and also reduce the specific odor of the solvent by further including a fragrance along with the solvent.

The present disclosure may use a fragrance having a specific log P value for a laundry composition using solketal and derivatives thereof as a solvent, thereby reducing the wrinkle formation on fibers after washing.

A washing machine according to the present disclosure may enable reuse of a solvent by collecting the solvent from the gaseous and liquid phases generated after washing fibers using the solvent.

In addition, the washing machine according to the present disclosure may prevent decomposition of the solvent by eliminating moisture from the collected solvent.

### Brief Description of Drawings

FIG. 1 is a schematic diagram of a conventional washing machine.
FIG. 2 is a schematic diagram of a washing machine in accordance with Example 2-1 of the present disclosure.
FIG. 3 is a schematic diagram of a washing machine in accordance with Example 2-2 of the present disclosure.
FIG. 4 is a schematic diagram of a washing machine in accordance with Example 2-3 of the present disclosure.
FIG. 5 is a schematic diagram of a washing machine in accordance with Example 2-4 of the present disclosure.
FIG. 6 is a schematic diagram of a washing machine in accordance with Example 2-5 of the present disclosure.
FIG. 7 is a schematic diagram illustrating a moisture eliminator included in a washing machine in accordance with an example embodiment of the present disclosure.

### Mode for Carrying Out the Invention

The objects, specific advantages, and novel features of the present disclosure will become more apparent from the following detailed description and preferred example embodiments taken in conjunction with the accompanying drawings. In the present specification, in adding reference numbers to the components of each drawing, it should be noted that only the same components are given the same number as possible even though they are indicated on different drawings. In addition, in describing the present disclosure, if it is determined that a detailed description of a related known technology may unnecessarily obscure the gist of the present disclosure, the detailed description thereof will be omitted.

Hereinafter, it should be noted that expressions such as high temperature, low temperature, high pressure, and low pressure are relative and do not represent absolute values.

Hereinafter, the term "fiber" as used herein refers to laundry that is to be washed by a washing machine according to an example embodiment of the present disclosure, and includes clothes, miscellaneous goods, bedding, and other products including fibers.

Hereinafter, a solvent refers to a mixture including a compound represented by the following Chemical Formula 1.

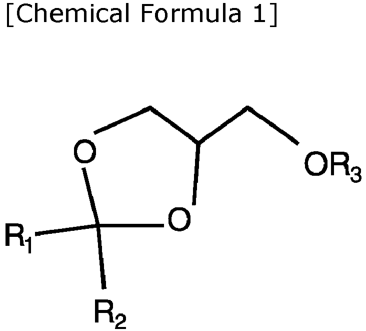

In the Formula,
R₁ and R₂ are each independently hydrogen or a linear or branched alkyl having 1 to 4 carbon atoms, and
R₃ is hydrogen or a linear or branched alkyl having 1 to 4 carbon atoms.

Specifically, in the Formula, R₁ and R₂ are each independently a linear or branched alkyl having 2 to 4 carbon atoms and may be connected to each other to form a cycloalkyl.

In the Formula, R₁ and R₂ may include an alkyl having 1 carbon atom; an alkyl having 1 and 2 carbon atoms, respectively; an alkyl having 1 and 3 carbon atoms, respectively; or an alkyl having 1 and 4 carbon atoms, respectively, wherein the alkyl having 4 carbon atoms may include branched alkyl.

For example, in the Formula, R₁ and R₂ may be methyl, and R₃ may be hydrogen. Alternatively, in the Formula, R₁ may be ethyl, propyl, or isobutyl, R₂ may be methyl, and R₃ may be hydrogen. Preferably, in the Formula, R₁ and R₂ may be methyl, and R₃ may be hydrogen.

Hereinafter, the solvent may further include a surfactant, a bleaching agent, a brightener, an anti-color transfer agent, a fragrance, and a preservative, in addition to the compound according to the Chemical Formula 1, and may further include a small amount of water. Steam refers to a gaseous phase in which these solvents are vaporized or a mixture of particulates.

Hereinafter, a laundry composition may be a composition for dry cleaning of fibers, and may be a liquid composition.

The laundry composition according to Example 1 of the present disclosure may include the solvent and fragrance represented by the Chemical Formula 1, and the fragrance may have a log P value of -1.0 to 4.5.

Hereinafter, the fragrance may refer to one or more compounds that are used together with the solvent of the present disclosure to emit fragrance from the laundry composition and fibers washed using the laundry composition.

Specifically, in the present disclosure, the fragrance, whose log P value is -0.1 to 4.5, is used to reduce the specific smell of the solvent in the washed fibers by having the fragrance remained in the fibers, thereby improving the lasting effect of the fragrance in the washed fiber.

In addition, the fragrance having the log P value as described above remains in the washed fibers to prevent the formation of wrinkles on the fibers. During the process of washing fibers, a process of removing contaminants with the involvement of mechanical force as well as contact with the laundry composition may be accompanied, which may cause temporary deformation of the fibers during the process. Although there is a difference depending on the type of material constituting the fiber, the fiber may be composed of molecules including a hydrophilic functional group on at least a part of the surface, and the hydrophilic functional groups may cause intermolecular attraction including hydrogen bonding among neighboring hydrophilic functional groups or water or hydrophilic molecules coming in contact during washing. Such intermolecular attraction acts relatively strongly upon deformation of the fibers, thereby forming wrinkles due to the crease of the fibers. The fragrance according to the present disclosure keeps, using the log P value as described above, the fiber surface relatively lipophilic while remaining in the fiber, thereby reducing the intermolecular force forming the fiber and preventing the formation of wrinkles in the fiber.

Hereinafter, P may be a fractionation coefficient indicating the solubility of a compound for two solvents, but specifically be an octanol-water fractionation coefficient. For example, P may be the ratio of the solubility of the compound for octanol to that of the compound for water. If the compound is lipophilic, the P value may be greater so as to be expressed as a log P value.

The fragrance may be an organic compound having a unique fragrance, but is not limited to aromatic while one with the log P value of -0.1 to 4.5 may be used. When the log P value of the fragrance is lower than -1.0, the fragrance rapidly volatilizes from the laundry composition or the surface of the fibers washed with the laundry composition, causing rapid reduction of the fragrance on the surface of the fibers. When the log P value of the fragrance is higher than 4.5, the compatibility with the solvent of the present disclosure is rapidly lowered, such that a phenomenon in which the fragrance and the solvent are separated in the laundry composition occurs. In other words, the fragrance used in the present disclosure may be one or more compounds that may be dissolved in a ratio of approximately 0.8 to 30,000 times with respect to octanol than with water.

Preferably, used may be the fragrance with a log P value of 0.5 to 4.5, more preferably a log P value of 0.7 to 4.5. More preferably, used may be the fragrance with a log P value of 1.0 to 4.4, and most preferably, a log P value of 2.0 to 4.4. The solvent according to the present disclosure may have a log P value of approximately 1.07, the log P value of the fragrance is similar to that of the solvent or relatively higher than the solvent, and one with a level that may maintain compatibility with the solvent is used, such that it possible to provide excellent persistence to the fiber after washing and outstanding compatibility of the composition itself at the same time.

The fragrance may be one or more compounds selected from the group consisting of (2-tert-butylcyclohexyl) acetate, 3-oxo-2-pentylcyclopentyl)acetic acid, (E)-4-decanal, 1-(1,2,3,4,5,6,7,8-octahydro-2,3,8,8-tetramethyl-2-naphthalenyl)ethanone, 1-(2,6,6-trimethyl-1-cyclohex-3-enyl)but-2-en1-one, 1-(2,6,6-trimethyl-2-cyclohexen-1-yl)penten-3-one, 1,2-dichloroethane, 1,3,3-trimethyl-2-oxabicyclo[2,2,2]octane, 1,4-dioxane, 1,6 hexanediol diglycidyl ether, 1,7,7-trimethylbicyclo[2.2.1]hept-2-yl acetate, 10-undecenal, 17a-hydroxyprogesterone, 1-bromoethane, 1-bromopentane, 1-butanol, 1-butene, 1-chlorohexane, 1-fluorooctane, 1-heptanol, 1-heptene, 1-hexanol, 1-hexene, 1-iodobutane, 1-methoxypropan-2-ol, 1-naphthol, 1-nonanol, 1-octanol, 1-octyne, 1-pentanol (1.56), 1-pentene (2.80), 1-propanol (0.25), 2-(2-butoxyethoxy)ethanol (0.65), 2-(dimethylamino)-5,6-dimethylpyrimidin-4-ol (1.63), 2-(ethoxycarbonyl)benzoic acid (1.80), 2,2,2-trichloro-1-phenylethanol, 2,3-butanediol, 2,4,6-trichlorophenol, 2,4-dichlorophenol, 2,4-dichlorophenoxyacetic acid, 2,4-dihydroxy-3,6-dimethylbenzoic acid, 2,4-dimethylcyclohex-3-ene-1-carbaldehyde, 2,6-dimethyl-2-heptanol, 2-butanol, 2-butanone, 2-butoxyethanol, 2-butyne, 2-chlorophenol, 2-cresol, 2-decanone, 2-ethoxy ethanol, 2-ethyl-1-hexanol, 2-ethylhexene, 2-heptanone, 2-hexanol, 2-hexanone, 2-hexen-1-ol, 2-hydroxybenzoic acid, 2-iodobutane, 2-isopropoxyethanol, 2-isopropoxyphenol, 2-MeTHF, 2-methoxy-4-(2-propenyl)-phenol, 2-methoxy-4-propylphenol, 2-methoxy-4-vinylphenol, 2-methoxyethanol, 2-methoxyethyl acetate, 2-methyl-1-butanol, 2-methyl-1-propanal, 2-methyl-2-butanol, 2-methyl-2-pentanol, 2-methyl-2-propanol, 2-methylbutyl acetate, 2-methylbutyric acid, 2-methylpropane, 2-methylpropionic acid, 2-naphthol, 2-naphthylamine, 2-nitro-4-phenylenediamine, 2-nonanone, 2-octanone, 2-octyne, 2-pentanone, 2-phenoxyethanol, 2-phenyl-1-ethanol, 2-phenylphenol, 2-propanol, 2-undecanone, 3(4)-(4-hydroxy-4-methylpentyl)-3-cyclohexene-1-carboxaldehyde), 3-(4-tert-butylphenyl)-2-methylpropanal(Lilial), 3,4-xylenol, 3,7-dimethyloct-6-en-1-ol, 3,7-dimethylocta-2,6-dienal, 3,7-dimethyloctan-3-ol, 3-cresol, 3-hexanol, 3-hexanone, 3-methyl-1-butanol, 3-methyl-3-pentanol, 3-methylbutyl acetate, 3-methylbutyric acid, 3-nitrophenol, 3-phenyl butanal, 3-phenyl-1-propanol, 4-(2,6,6-trimethyl-1-cyclohexene-1-yl)-3-butene-2-one, 4-(methylthio)-3,5-xylenol, 4-acetamidophenol, 4-amino-2-nitrophenol, 4-aminobenzoic acid, 4-aminophenol, 4-bromophenol, 4-chloro-3-xylenol, 4-chlorocresol, 4-chlorophenol, 4-cresol, 4-cyanophenol, 4-ethoxy-4-oxobut-2-enoic acid, 4-ethyl phenol, 4-heptyloxyphenol, 4-iodophenol, 4-methoxy acetophenone, 4-methoxybenzyl alcohol, 4-methylpentanoic acid, 4-nitroaniline, 4-nitrophenol, 4-pentyloxyphenol, 5-fluorouracil, 5-hexyloxolan-2-one, acetaldehyde, acetic acid, acetone, acetonitrile, acetophenone, acetyl cedrene, acetylcysteine, acetylsalicylic acid, allyl alcohol, allylheptanoate, alpha terpineol, amobarbital, amyl alcohol, amyl salicylate, androstenedione, anethole USP, aniline, α-terpineol, atrazine, atropine, azodrin, barbital, benzaldehyde, benzene, benzocaine, benzoic acid, 2-amino-, dihydrochloride, benzophenone, benzyl acetate, benzyl alcohol, benzyl benzoate, benzyl nicotinate, benzyl salicylate, beta terpineol, beta-estradiol, boric acid, butachlor, butobarbital, butyl 4-hydroxybenzoate, butyl acetate, butyl alcohol, butyl nicotinate, butyraldehyde, butyric acid, caffeine, carbamic acid, dimethyl-, ethylester, carbaryl, carvone, catechol, chloramphenicol, chlorocresol, chloroform, chloroxylenol, chlorpheniramine, cinnamic acid, cinnamic aldehyde, cinnamic alcohol, cinnamyl alcohol, cinnamyl anthranilate, cis-1,3-dichloropropene, cis-3-hexenyl acetate, cis-6-nonenal, cis-jasmone, codeine, cortexone, coumarin, cumene, cyclododecanone, cyclohexane, cyclohexanone, cyclopentanone, cycloundecanone, decanal, decanoic acid, deoxycorticosterone, diisopropylfluorophosphate (DFP), dehydroepiandrosterone (DHEA), diazinon, dichloromethane, diclofenac, diethyl ether, diethyl maleate, diethyl malonate, diethyl phthalate, diethylene glycol monobutyl ether, diethylene glycol monobutyl ether acetate, diethylether, dihydro linalool, dihydromyrcenol, dihydro-α-terpineol, dimethoate, dimethyl benzyl carbinyl acetate, dimethyl carbonate, dimethylcyclohexanol, dimethylethylamine, dimethylformamide, dimethylnitrosamine, dinitrochlorobenzene, diphenyl ether, dipropylene glycol methyl ether, dl-citronellol, d-limonene, dimethyl phthalate (DMP), E-2-butenal, E-2-hexenal, E-2-octene, ethylene glycol, ephedrine, estradiol, estragole, estriol, estrone, ethane, ethanol, ethyl acetate, ethyl benzene, ethyl ether, ethyl hydrogen malonate, ethyl nicotinate, ethyl vanillin, ethylbenzene, ethylene glycol methyl ether, ethynylbenzene, eucalyptol, eugenol, eugenyl methyl ether, flor acetate, flutamide, geraniol, geranyl nitrile, glycerol formal, hedione, heptanal, heptane, heptanoic acid, heptanol, hexanal, hexanoic acid, hexanol, hippuric acid, hydrochloric acid, hydroxycitronellal, ibuprofen, indole, iodomethane, iso eugenol, isobutyl isobutyrate, isobutyl salicylate, isoeugenol, isopentyl isovalerate, isoquinoline, koavone, lactic acid, Liffarome, linalool, lindane, malathion, maleic acid, malonic acid, 4,4'-methylenebis(2-chloroaniline) (MbOCA), m-cresol, MDA, meperidine, mesitylene, methanol, methiocarb, methyl 2-(3-oxo-2-pentylcyclopentyl)acetate, methyl 2-nonynoate, methyl acetate, methyl anthranilate, methyl atrarate, methyl benzoate, methyl beta naphthyl ketone, methyl dihydrojasmonate, methyl isobutyl ketone, methyl N methylanthranilate, methyl nicotinate, methyl propionate, methyl salicylate, methyl tert-butyl ether, methyl-4-hydroxy benzoate, methyl-4-OH benzoate, methyl-parathion, methylsalicylate, morphine, musk ketone, m-xylene, N,N-diethyl-m-toluamide, naproxen, n-butane, n-butanol, n-decanol, nerol, n-heptane, n-heptanol, n-hexane, n-hexanol, N-hexyl nicotinate, nicotinamide, nicotine, nicotinic acid, nitrobenzene, nitroglycerine, N-methyl pyrrolidone, N-methylcarbamate, n-nonanol, n-octanol, nonalactone, nonanoic acid, n-pentane, n-pentanol, N-phenyl-2-naphthylamine, n-propanol, n-propoxyethanol, o-chlorotoluene, o-cresol, o-cresyl glycidyl ether, octanal, octanoic acid, octanol, orange flower ether phenyl ethyl acetate, o-toluidine, o-xylene, paraoxon, parathion, p-cresol, pentanoic acid, pentanol, phenethyl alcohol, phenobarbital, phenol, phenoxanol, phenoxy ethyl isobutyrate, phenyl ethyl alcohol, phenyl propyl alcohol, phenylethyl alcohol, phosmet, phoxim, phthalic acid, pirimicarb, pregnenolone, progesterone, prop-2-enyl heptanoate, propane, propenal, propene, propionaldehyde, propionic acid, propoxur, propranolol, propyl acetate, propyl butyrate, propyl formate, propylene carbonate, propylene glycol, p-t-butyl-α-methylhydrocinnamic aldehyde, p-xylene, pyridine, resorcinol, safrole, salicylic acid, scopolamine, styrene, terpinen-4-ol, tert-butanol, testosterone, tetrahydrofuran, tetrahydrolinalool, theophylline, thymol, toluene, triacetin, trichloromethane, trichloromethyl phenyl carbinyl acetate, triclopyr, tricyclododecenyl acetate, triethanolamine, trifluoroacetic acid, trimethylamine, undecanoic acid, valeric acid, vanillin, and α-methyl-1,3-benzodioxole-5-propionaldehyde, preferably, the fragrance may be one or more compounds selected from the group consisting of vanillin, resorcinol, 2,4-dihydroxy-3,6-dimethylbenzoic acid, geraniol, benzylbenzoate, and 2-ethylhexene.

The laundry composition according to an example embodiment may include the fragrance in an amount of 0.0001 to 30 wt% with respect to 100 wt% of the laundry composition. When the content of the fragrance is lower than 0.0001 wt%, the effect of reducing the specific smell for the solvent is rapidly diminished. When the content of the fragrance is higher than 30 wt%, the decontamination effect of the solvent for the fiber is rapidly diminished.

The laundry composition according to an example embodiment, within the scope that does not impair the object of the present disclosure, may further include one or more additives selected from the group consisting of an organic solvent, surfactant, electrolyte, detergent auxiliary, stabilizer, enzyme, preservative, dye, viscosity modifier, metal ion sealing agent, fatty acids, thickeners, and pH adjusters.

Monool, polyol, and the like may be used as the organic solvent. For example, the organic solvent may be an alcohol having 1 to 4 carbon atoms, and may be one or more selected from the group consisting of methanol, ethanol, propanol, isopropanol, butanol, and glycerin, but is not limited thereto.

A cationic surfactant, an anionic surfactant, an amphoteric surfactant, and a nonionic surfactant may be used as the surfactant, which may improve the cleaning power and stability of the laundry composition for specific contaminants. For example, the cationic surfactant may be one or more selected from the group consisting of esterquats, alkyldimethylbenzeneammonium chloride, distearylmethylammonium chloride (TEACI), imidazolinium derivatives, and the like; the anionic surfactant may be one or more selected from the group consisting of soap, alkylbenzene sulfonate, alkane sulfonate, alpha olefin sulfonate, alpha sulfo fatty acid methyl ester, alkyl sulfate, alkyl ether sulfate, and the like; the amphoteric surfactant may be one or more selected from the group consisting of alkyl betaine, alkyl sulfo betaine, and the like; and the nonionic surfactant may be one or more selected from the group consisting of alcohol ethoxylate, alkylphenol ethoxylate, alkylamine oxide, methylglucamide, alkylpolyglucoside, and the like, but are not limited thereto.

The type of electrolyte is not particularly limited, and electrolytes used in the art may be used without limitation. The electrolyte may improve the solubilization stability of other additives including a surfactant in the laundry composition, thereby improving the cleaning power of the laundry composition. For example, a salt of organic or inorganic acid may be used in the electrolyte, wherein the salt may be one or more selected from the group consisting of chloride, bromide, iodide, acetate, bicarbonate, phosphate, citrate, sulfate, polyphosphate, pyrophosphate, triphosphate, tetraphosphate, silicate, metasilicate, polysilicate, carbonate, hydroxide, and alkali metal salt.

Enzymes may improve the cleaning power for specific contaminants. For example, the specific contaminant may include a protein, and the enzyme may be one or more selected from the group consisting of protease, lipase, and amylase, but is not limited thereto.

The preservative may prevent deterioration of the laundry composition and include, for example, one or more selected from the group consisting of ethanol, phenoxy ethanol, benzisothiazolinone, methylchloroisothiazolinone, methylisothiazolinone, pentynediol, parabens, and sodium benzoate, but is not limited thereto.

The viscosity modifier may be a thickener and one or more selected from the group consisting of inorganic salts, hydroxyethyl cellulose, xanthan gum, and fatty acid alkanolamide that are used in the art.

Additionally, components such as a bleach, dye, pH adjuster, and bubble adjuster may be used alone or in combination within a range that does not impair the purpose of the present disclosure, but is not limited thereto.

The present disclosure provides a use of the composition according to Example 1. Specifically, the present disclosure provides a use of the composition including the solvent and fragrance represented by Chemical Formula 1 above as a laundry composition.

In addition, the present disclosure provides a method of treating fibers or a product including the same using the laundry composition including the solvent and fragrance represented by Chemical Formula 1 above. Specifically, the present disclosure provides a washing method by bringing the laundry composition including the solvent and fragrance represented by Chemical Formula 1 above into contact with fibers or products including the same, a dry cleaning method, a contaminant removal method, or a foreign substance removal method.

Hereinafter, more specific example embodiments of the laundry composition of the present disclosure will be described.

### Example 1. A laundry composition including a solvent and a fragrance

As a compound according to the above-mentioned Chemical Formula 1, solketal of which R₁ and R₂ are methyl and R₃ is hydrogen was used as a solvent, and a laundry composition including the fragrance according to Table 1 below was prepared.

Solvents having a log P value of approximately 0.7 to 4.3 were used in Examples, only the solvent was used without addition of a fragrance in Comparative Example 1-1, solvents having a log P value less than -1.0 were used in Comparative Example 1-2, and solvents having a log P value higher than 4.5 were used in Comparative Example 1-3, respectively. Except for Comparative Example 1-1 in which only the solvent was used, in the Examples and Comparative Examples below, preparation was followed by adding 95 wt% of the solvent and 5wt% of the fragrance with respect to 100 wt% of the total laundry composition so as to identify the effect of the solvent and the fragrance.

**TABLE 1**

| | Solvent (Solketal) | Fragrance | | |
|---|---|---|---|---|
| | Content (wt%) | Type | Log P | Content (wt%) |
| Example 1-1 | 95 | Vanillin | 0.71 | 5 |
| Example 1-2 | 95 | Resorcinol | 1.13 | 5 |
| Examples 1-3 | 95 | 2,4-Dihydroxy-3,6-dimethylbenzoic acid | 2.19 | 5 |
| Example 1-4 | 95 | Geraniol | 3.47 | 5 |
| Example 1-5 | 95 | Benzylbenzoate | 3.97 | 5 |
| Example 1-6 | 95 | 2-Ethylhexene | 4.31 | 5 |
| Comparative Example 1-1 | 100 | - | - | 0 |
| Comparative Example 1-2 | 95 | Ethylene glycol | -1.93 | 5 |
| Comparative Example 1-3 | 95 | Alpha-hexyl cinnamaldehyde | 4.68 | 5 |

### Experimental Example 1-1. Evaluation of the specific smell of solketal and the scent of the fragrance of fibers after washing

After fibers were washed using the laundry composition according to the Examples and Comparative Examples according to the present disclosure and then dried, the specific smell of solketal as a solvent and the scent of the fragrance in the fiber were subjected to sensory evaluation, respectively, and the results are shown in the Table 2 below.

The evaluation on the specific smell of solketal and the scent of the fragrance was performed through the intensity of lingering fragrance, and the average was calculated by evaluation targetting 15 fragrance evaluation agents (5 points: very strong, 4 points: strong, 3 points: moderate, 2 points: weak, 1 point: very weak).

**TABLE 2**

| | Specific odor of solketal | Fragrance |
|---|---|---|
| Example 1-1 | 3.0 | 3.2 |
| Example 1-2 | 2.7 | 3.7 |
| Example 1-3 | 2.3 | 4.0 |
| Example 1-4 | 2.2 | 4.2 |
| Example 1-5 | 1.7 | 4.2 |
| Example 1-6 | 1.5 | 4.3 |
| Comparative Example 1-1 | 4.8 | - |
| Comparative Example 1-2 | 4.5 | 1.7 |
| Comparative Example 1-3 | 4.5 | 1.9 |

It was found that the higher the log P value of the fragrance was, included in the laundry composition according to an example embodiment, the lower the specific smell of solketal was in the fiber after washing, whereas it was found in Comparative Examples 1-2 with the log P value lower than -1.0 and Comparative Example 3 with the log P value exceeding 4.5 that the degree of reduction in the specific smell was sharply reduced to a level similar to that of Comparative Example 1-1 in which an additional fragrance was not used.

Similarly, the higher the log P value of the fragrance was, included when the laundry composition according to an example embodiment was used, the stronger the intensity of the fragrance was in the fibers after washing, but it was found that the intensity was very weak when the fragrances according to Comparative Examples 1-2 and 1-3 were used.

Such the result was attributable to the fact that the more lipophilic the fragrance with the relatively higher the log P value used in the laundry composition was, the more likely it is to remain in the fiber without being washed off to reduce the specific smell of solketal and emit its own fragrance. The result of Comparative Example 1-3 was attributable to the fact that application was made in a state in which the solvent and the fragrance were separated in the laundry composition due to the log P value of the fragrance that became too large, making the relatively large amount of solketal remained on the fiber surface.

### Experimental Example 1-2. Evaluation of the degree of wrinkle formation on fibers after washing

The laundry composition according to Examples and Comparative Examples according to the present disclosure was used to wash and dry the fiber to conduct sensory evaluation on the degree of wrinkle formation, and the results are shown in Table 3 below.

After washing, the degree of wrinkling formation on the fibers was evaluated as a complex satisfaction based on visual and tactile senses, and the average was calculated by evaluation targeting 15 fiber evaluation monitoring agents (5 points: very satisfied, 4 points: satisfied, 3 points: average, 2 points: dissatisfied, 1 point: very dissatisfied).

**TABLE 3**

| | Satisfaction with wrinkle |
|---|---|
| Example 1-1 | 3.7 |
| Example 1-2 | 3.7 |
| Example 1-3 | 3.9 |
| Example 1-4 | 4.0 |
| Example 1-5 | 4.3 |
| Example 1-6 | 4.3 |
| Comparative Example 1-1 | 2.3 |
| Comparative Example 1-2 | 1.8 |
| Comparative Example 1-3 | 2.7 |

It was found that the higher the log P value of the fragrance was, included when using the laundry composition according to an example embodiment, the higher the satisfaction was due to the reduced amount of wrinkles formed in the fibers after washing. However, in Comparative Examples 1-2 with the log P value lower than -1.0 and Comparative Examples 1-3 with the log P value exceeding 4.5, it was found that the amount of wrinkles was rather increased.

Such the result was attributable to the fact that the more lipophilic the fragrance was, with a relatively large log P value used in the laundry composition, the more likely it was to remain on the fiber surface to reduce the intermolecular attraction on the fiber surface. In Comparative Example 1-3, it seems that the log P value of the fragrance that became too large caused the solvent and the fragrance to be separated in the laundry composition to make it difficult for the fragrance to remain, thereby easily forming wrinkles due to intermolecular attraction acting among the hydrophilic functional groups on the fiber surface.

Hereinafter, a conventional washing machine and a washing machine according to Example 2 of the present disclosure will be described with reference to the drawings of the present disclosure.

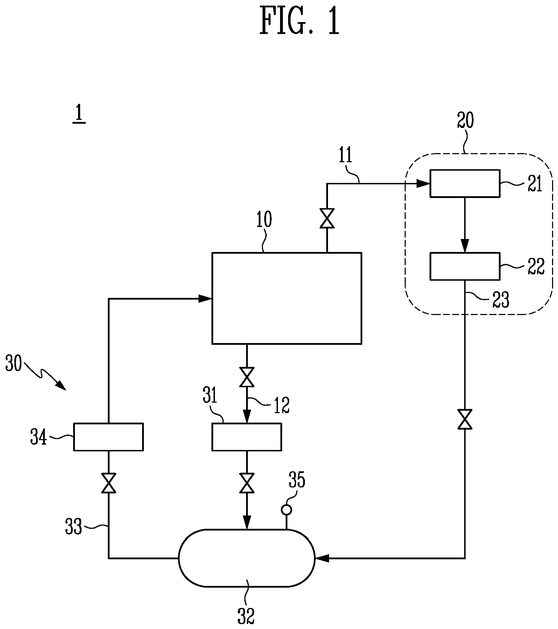

FIG. 1 is a schematic diagram illustrating the conventional washing machine. Referring to FIG. 1, the conventional washing machine includes a washing unit 10, a steam collector 20, and a solvent collector 30.

The washing unit 10 may be configured to provide a space to accommodate fibers therein and supply a solvent to the space to wash the accommodated fibers. The washing unit 10 may be supplied with the solvent and spray to or mix with the fibers to remove contaminants in the fibers. For example, the washing unit 10 may be configured to remove contaminants in the fibers by first spraying the solvent onto the fibers and then supplying a small amount of water to rotate with the fibers. The fibers washed in the washing unit 10 may be removed from the washing unit 10 and dried after steam is sprayed to remove additional contaminants.

Most of the solvent supplied to the washing unit 10 maintains a liquid phase, but the contaminants in the fiber may be easily removed upon contact with a higher temperature solvent. Accordingly, the solvent may be supplied to the washing unit 10 in a state of being heated to 30 to 60°C or heated to a predetermined temperature by the washing unit 10 to wash the fibers. In addition, as the washing unit 10 accompanies rotational motion, at least a part of the solvent may be vaporized or scattered in the form of fine particles, and water mixed in the solvent may also be partially vaporized or scattered and mixed to form steam. The washing unit 10 may be configure to discharge the used solvent in gaseous and liquid phase, and the gaseous phase may be delivered to a steam collector 20 to be described later, and the liquid phase to the solvent collector 30 to be described later.

Specifically, a steam suction line 11 and a solvent collecting line 12 are connected to the washing unit 10 so that gaseous and liquid phases may be discharged, respectively. The steam suction line 11 may be configured to forcibly suck in the gaseous solvent in the washing unit 10 after washing and supply the same to the steam collector 20. The solvent collecting line 12 may be configured to collect the liquid solvent in the washing unit 10 after washing and supply the solvent to the solvent collector 30.

The steam collector 20 may include a steam suction unit 21 for sucking the gaseous solvent generated in the washing unit 10 and a steam condenser 22. The steam suction unit 21 is connected to the steam suction line 11 to generate a negative pressure, so that the gaseous solvent generated in the washing unit 10 may be collected by forcible suction. The steam condenser 22 may be configured to condense the steam collected from the steam suction unit 21 to convert the steam into a liquid phase and deliver the same to the solvent collector 30. Specifically, the steam condenser 22 may cool the steam by heat-exchange between the high temperature steam and water to condense the steam into a liquid phase. The solvent condensed in the steam condenser 22 may be supplied to the solvent collector 30 through the steam collecting line 23.

The solvent collector 30 may include a filter unit 31 configured to remove foreign substances contained in the solvent, and a solvent storage 32 configured to store the solvent supplied from the filter unit 31.

The filter unit 31 may be configured to receive the liquid solvent discharged from the washing unit 10 through the solvent collecting line 12. The filter unit 31 may include a meshed net or a packing material including diatomaceous earth and be configured to primarily remove foreign substances mixed in the solvent by passing the solvent through. The solvent that passed through the filter unit 31 may be delivered to and stored in the solvent storage 32.

The solvent storage may be a solvent storage tank 32 that provides a space configured to store the solvent discharged from the washing unit 10. The solvent storage tank 32 may be configured to store the solvent that passed through the filter unit 31 and the condensed solvent supplied from the steam collector 20. Since the solvent stored in the solvent storage tank 32 still contains contaminants derived from water and fibers, at least a part of the solvent may be hydrolyzed in the process of collecting and storing the solvent. Therefore, when the solvent stored in the solvent storage tank 32 is supplied to the washing unit 10 to be reused, washing efficiency may be reduced, such that the solvent storage tank 32 may be provided to be detachable from the washing machine to enable exchange and replenishment of the solvent. The solvent storage tank 32 may be connected to a solvent supplier 34 through the solvent collecting line 33.

The solvent supplier 34 may be configured to withdraw the solvent stored in the solvent storage tank 32 and supply the solvent to the washing unit 10. Specifically, the solvent supplier 34 may be configured to withdraw the liquid solvent using a pump to supply the solvent by pressurizing with pressure suitable for spraying in the washing unit 10. Alternatively, a heating means may further be provided to supply the solvent by heating to a temperature required in the washing unit 10.

Such the conventional washing machine is configured to collect the solvent used in the washing unit, store the same in a liquid phase, and then re-supply to the washing unit again, which caused a problem in that the efficiency was reduced upon reuse due to the decomposition of the solvent due to the mixing of water and solvent in the solvent storage.

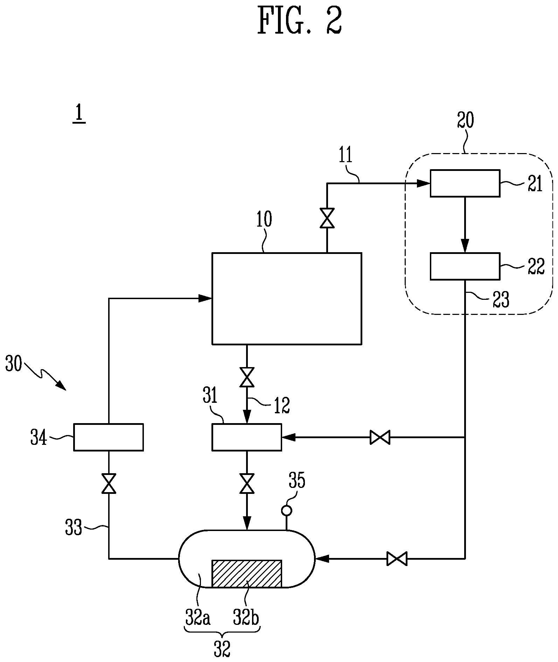

A washing machine 1 according to Example 2 of the present disclosure will be described with reference to FIGS. 2 to 6.

Referring to FIG. 2, the washing machine 1 according to Example 2-1 of the present disclosure includes the washing unit 10, the steam collector 20, and the solvent collector 30, wherein the solvent collector 30 includes a solvent storage tank 32a, an adsorption cartridge 32b, and a sensor unit 35.

Hereinafter, the Example 2-1 will be mainly described in terms of differences from the conventional washing machine as shown in FIG. 1, and parts omitted from the description are replaced with the previous content.

The washing unit 10 may be configured to receive the solvent or the laundry composition of the above-described example embodiment to wash the fibers accommodated therein. After washing, the gaseous phase discharged from the washing unit 10 may be supplied to the solvent collector 30 through the steam collector 20, and the liquid phase discharged from the washing unit 10 may be supplied to the solvent collector 30.

The solvent collector 30 may include the filter unit 31, the solvent storage 32, the solvent collecting line 33, and the solvent supplier 34.

The filter unit 31 may be configured to receive at least one of the liquid solvent discharged from the washing unit 10 through the solvent collecting line 12 and the condensed solvent supplied from the steam collector 20 through the steam collecting line 23. Of the solvents forcibly sucked through the steam suction unit 21, not only gaseous solvents but also particulate solvents and moisture may be included, and the particulates may include contaminants derived from fibers. The filter unit 31 may also be configured to remove foreign substances included in the condensed solvent. The condensed solvent supplied from the steam collector 20 may be supplied to at least one of the filter unit 31 and the solvent storage 32.

The solvent storage 32 may include the solvent storage tank 32a, the adsorption cartridge 32b, and the sensor unit 35, and be configured to store the solvent passing through the filter unit 31 and the condensed solvent supplied from the steam collector 20.

The solvent storage tank 32a may be provided to be detachable from the washing machine 1. Since at least a part of the solvent stored in the solvent storage tank 32a may evaporate naturally, the solvent storage tank 32a may be configured to accommodate liquid and gaseous solvents therein. The solvent storage tank 32a may be configured to supply a liquid solvent to the solvent supplier 34 to be described later. The solvent storage tank 32a may include the adsorption cartridge 32b and the sensor unit 35.

The adsorption cartridge 32b may be separated by adsorbing water mixed in the solvent stored in the solvent storage tank 32a. The adsorption cartridge 32b may be disposed to be removable inside the solvent storage tank 32b. For example, the adsorption cartridge 32b may be provided to be detachable to and from one surface inside the solvent storage tank 32a. Although not shown, the solvent storage tank 32a may be provided to open at least a part of the wall surface, for example, a part of the upper surface, and the adsorption cartridge 32b may be disposed or replaced when opening the part of the wall surface.

The adsorption cartridge 32b may be configured to separate water through at least one of physical adsorption and chemical adsorption. For example, the adsorption cartridge 32b may include a meshed case and a packing material filled inside the case. The packing material may be an adsorbent using physical adsorption such as active carbon, charcoal, silica gel, alumina gel, activated clay, zeolite, or bentonite, or an adsorbent using chemical adsorption such as sulfuric acid, water, or ion exchange resin to separate water by separating water and ions dissolved in water. At least a part of the adsorption cartridge 32b may be in contact with the solvent stored in the solvent storage tank 32b. For example, the adsorption cartridge 32b may be provided on the inner wall surface of the solvent storage tank 32a, so that only a part thereof may be disposed to be immersed in the solvent.

The sensor unit 35 may be configured to measure the content of moisture contained in the solvent storage tank 32a. Specifically, the sensor unit 35 may be configured to measure the content of moisture contained in the liquid and gaseous solvents stored in the solvent storage tank 32a.

The sensor unit 35 may be configured to measure the content of moisture contained in the solvent stored in the solvent storage tank 32a using at least one of electrical conductivity, pH concentration, color, viscosity, and infrared rays. The sensor unit 35 may be configured to measure the electrical conductivity by applying a small amount of electricity to the solvent and output information on the moisture content contained in the solvent by comparing with an electrical conductivity value for the prepared pure solvent. The sensor unit 35 may be configured to measure the pH concentration of the solvent and output information on the moisture content contained in the solvent by comparing with a pH concentration value for the prepared pure solvent. The sensor unit 35 may be a charge coupled device (CCD) sensor and configured to output information on the color of the solvent. The sensor unit 35 may be configured to generate vibration in the solvent using a piezoelectric vibrator to measure a frequency and output information on the moisture content contained in the solvent by comparing with a frequency value for the prepared pure solvent. The sensor unit 35 may be configured to output information on the moisture content by irradiating infrared rays to the solvent and checking whether there is an absorption wavelength of water molecules from the reflected wavelength.

The washing machine 1 may be configured to output information on the moisture content in the solvent storage tank 32a to a user based on the information received from the sensor unit 35.

The solvent supplier 34 may be configured to re-supply the solvent collected in the solvent storage 32 back to the washing machine 1. The solvent supplier 34 may be configured to withdraw the liquid solvent stored in the solvent storage tank 32a by having a pump and supply the solvent by pressurizing with the pressure required in the washing unit 10.

As described above, the Example 2-1 may include the adsorption cartridge 32b inside the solvent storage tank 32a of the solvent storage 32 and be configured to separate water from the solvent collected from the washing unit 10 to prevent decomposition of the solvent. The solvent storage tank 32a is provided with the sensor unit 35 to monitor the internal moisture content in real time, so as to check the replacement time of the adsorption cartridge 32b or the solvent storage tank 32a, thereby preventing reduction in washing efficiency due to solvent reuse.

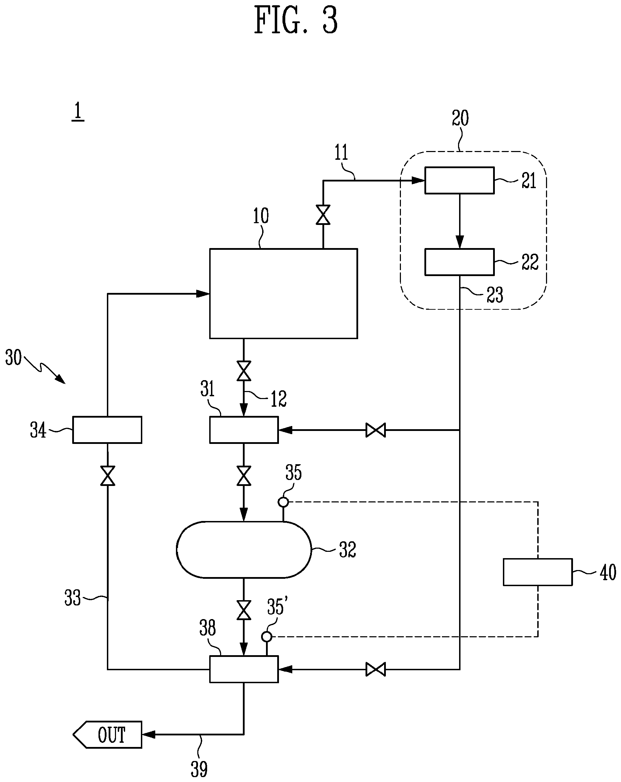

Referring to FIG. 3, the washing machine 1 according to Example 2-2 of the present disclosure includes the washing unit 10, the steam collector 20, the solvent collector 30, and a controller 40, wherein the solvent collector 30 includes a moisture eliminator 38, the solvent storage 32, and the sensor unit 35.

Hereinafter, the Example 2-2 will be mainly described in terms of differences from the previous Example 2-1, and the parts omitted from the description will be replaced with the previous content.

The washing unit 10 may be configured to receive the solvent to wash the fibers accommodated therein. After washing, the gaseous phase discharged from the washing unit 10 may be supplied to the solvent collector 30 through the steam collector 20, and the liquid phase discharged from the washing unit 10 may be supplied to the solvent collector 30.

The solvent collector 30 may include the filter unit 31, the solvent storage 32, the moisture eliminator 38, and the solvent supplier 34. The liquid solvent discharged from the washing unit 10 may be stored in the solvent storage 32 after passing through the filter unit 31. The solvent storage 32 may be provided with the sensor unit 35 to measure the moisture content in the solvent storage 32.

The moisture eliminator 38 may be configured to eliminate moisture from the liquid solvent supplied from the solvent storage 32. Specifically, the moisture eliminator 38 may include a permeable membrane configured to separate the solvent and water.

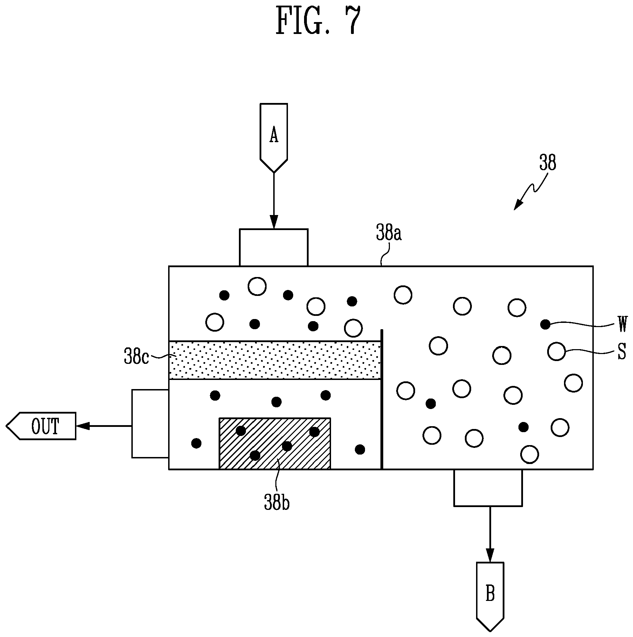

FIG. 7 is a schematic diagram illustrating the internal structure of the moisture eliminator 38. Referring to FIG. 7, the moisture eliminator 38 may include a housing 38a configured to receive the inflow stream A from the solvent collector 30 and discharge the outflow stream B. The moisture eliminator 38 includes a permeable membrane 38c configured to separate the solvent and water therein.

The permeable membrane 38c may be configured to transmit only water molecules (W) from the stream in which solvent molecules S and water molecules W are mixed, so as to be discharged to the outside OUT. The permeable membrane 38c may be a permeable evaporation membrane, a hollow fiber membrane, or a reverse osmosis membrane. When the permeable membrane 38c is the reverse osmosis membrane, the moisture eliminator 38 may be provided at a lower end of the solvent storage 32 to separate water using the pressure of the inflow stream A itself, or further include a pump configured to pressurize the inflow stream A. Solvent molecules S and a small amount of water molecules W that do not pass through the permeable membrane 38c may flow out B of the moisture eliminator 38.

The moisture eliminator 38 may be configured to supply the solvent that passed through the permeable membrane 38c to the solvent supplier 34. The outflow stream B may be delivered to the solvent supplier 34 through the solvent collecting line 33.

The moisture eliminator 38 may further include a second sensor unit 35' configured to measure the content of moisture contained in the moisture eliminator 38. The second sensor unit 35' may be configured to measure the moisture content in the moisture eliminator 38 in the same manner as the sensor unit 35 described above, preferably the moisture content of the outflow stream B discharged from the moisture eliminator 38.

The controller 40 may be configured to receive information on the moisture content from at least one of the sensor unit 35 and the second sensor unit 35'. The controller 40 may be configured to monitor the situation inside the solvent storage 32 and the moisture eliminator 38 in real time based on the received information and output the monitored information to a display or a speaker.

As described above, in Example 2-2, the solvent collected from the washing unit 10 may be stored in the solvent storage 32 after passing through the filter unit 31 and then supplied to the moisture eliminator 38 to supply water to the washing unit 10 in a separated state through the permeable membrane. The solvent storage 32 and the moisture eliminator 38 may be provided with the sensor units 35 and 35' to monitor the moisture content inside in real time, thereby preventing degradation in washing efficiency due to solvent reuse.

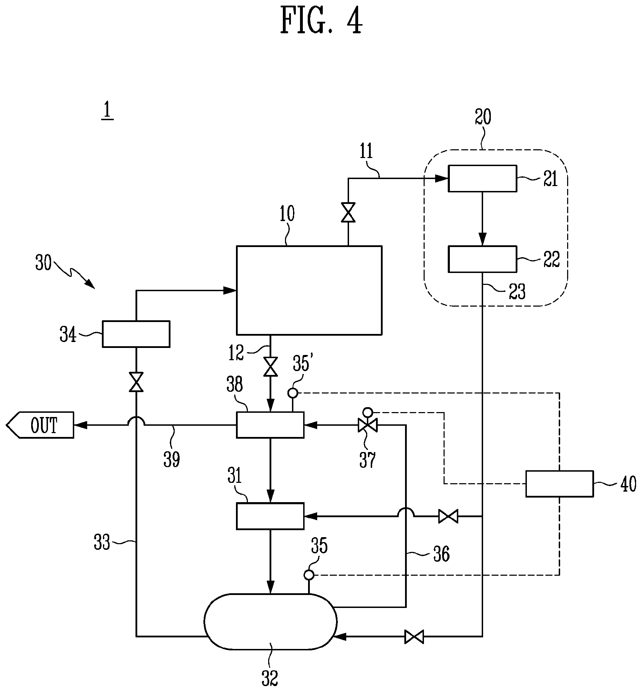

Referring to FIG. 4, the washing machine 1 according to Example 2-3 of the present disclosure includes the washing unit 10, the steam collector 20, the solvent collector 30, and the controller 40, wherein the solvent collector 30 includes the moisture eliminator 38, the solvent storage 32, and the sensor unit 35.

Hereinafter, the Example 2-3 will be mainly described in terms of differences from the previous Example 2-2, and the parts omitted from the description will be replaced with the previous content.

The washing unit 10 may be configured to receive the solvent to wash the fibers accommodated therein. After washing, the gaseous phase discharged from the washing unit 10 may be supplied to the solvent collector 30 through the steam collector 20, and the liquid phase discharged from the washing unit 10 may be supplied to the solvent collector 30.

The solvent collector 30 may include the moisture eliminator 38, the filter unit 31, the solvent storage 32, and the solvent supplier 34. The liquid solvent discharged from the washing unit 10 may be supplied to the moisture eliminator 38 first to be supplied to the filter unit 31 after the water mixed with the solvent is first separated. The solvent that passed through the filter unit 31 may be stored in the solvent storage 32. The sensor unit 35 and the second sensor unit 35' are provided in the solvent storage 32 and the moisture eliminator 38, respectively, to measure the moisture content therein.

The washing machine 1 according to an example embodiment may further include a solvent return line 36 configured to connect the solvent storage 32 and the moisture eliminator 38. The solvent return line 36 may be configured to supply the solvent stored in the solvent storage 32 to the moisture eliminator 38. Specifically, the solvent return line 26 may be configured to transfer the liquid solvent stored in the solvent storage 32 to the front end of the moisture eliminator 38. For example, the solvent return line 26 may have one end connected to the lower portion of the solvent storage tank and the other end to the solvent collecting line 12 or the moisture eliminator 38. A solvent return valve 37 configured to be able control the opening/closing and the degree of opening may be provided on the solvent return line 36 to control the flow rate of the solvent supplied to the moisture eliminator 38.

The controller 40 may be configured to receive information on the moisture content from at least one of the sensor unit 35 and the second sensor unit 35'. The controller 40 may be configured to adjust the degree of opening of the solvent return valve 37 according to the moisture content measured by at least one of the sensor unit 35 and the second sensor unit 35' to control flow rate of the solvent supplied to the moisture eliminator 38.

For example, the controller 40 may be configured to store information on the composition of a solvent suitable for reuse by supplying to the solvent supplier 34. The controller 40 may have a predetermined reference value for the moisture content in the solvent storage 32 and the moisture eliminator 38. When the moisture content measured by the sensor unit 35 of the solvent storage 32 is greater than a predetermined first reference value, the controller 40 may be configured to open the solvent return valve 37 or increase the degree of opening. The first reference value may be the maximum value of moisture that the solvent may contain, and when the content of moisture stored in the solvent storage 32 exceeds the value, at least a part of the solvent is supplied to the moisture eliminator 38 to eliminate moisture. When the moisture content measured by the second sensor unit 35' of the moisture eliminator 38 is less than a predetermined second reference value, the controller 40 may be configured to open the solvent return valve 37 or increase the degree of opening. The second reference value may be the maximum value of moisture that the moisture eliminator 38 may handle per unit flow rate or per unit time, and when the amount of moisture treated in the moisture eliminator 38 is less than the value, a part of the solvent stored in the solvent storage 32 may be further treated.

As described above, in Example 2-3, the solvent collected from the washing unit 10 may be stored in the solvent storage 32 after passing through the moisture eliminator 38 and the filter unit 31 and then supplied to the washing unit 10. The solvent storage 32 and the moisture eliminator 38 may be provided with sensor units 35 and 35' to monitor the moisture content inside in real time, and the controller 40 may be configured to further eliminate moisture by supplying the solvent in the solvent storage 32 back to the moisture eliminator 38 according to the information on the moisture content received from at least one of the sensor units 35 and 35' of the solvent storage 32 and the moisture eliminator 38.

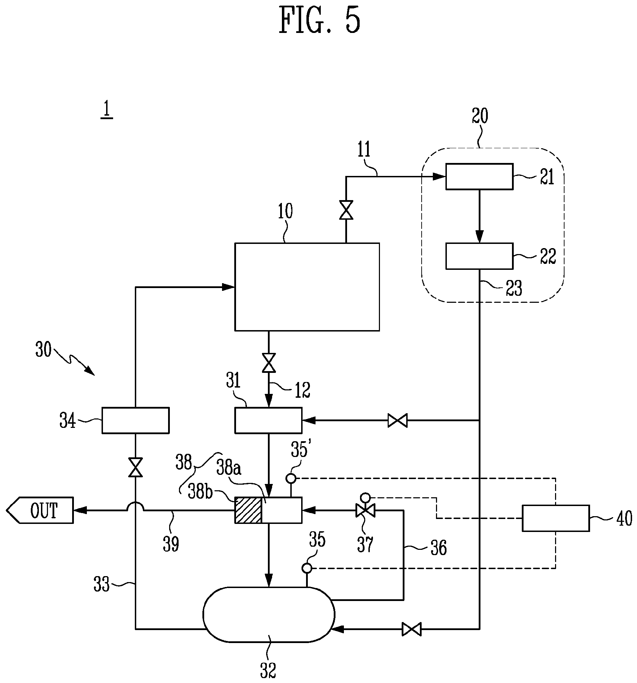

Referring to FIG. 5, the washing machine 1 according to Example 2-4 of the present disclosure includes the washing unit 10, the steam collector 20, the solvent collector 30, and the controller 40, wherein the solvent collector 30 includes the moisture eliminator 38, the solvent storage 32, and the sensor unit 35.

Hereinafter, the Example 2-4 will be mainly described on the points that are different from the previous Example 2-3, and the parts omitted from the description will be replaced with the previous content.

The washing unit 10 may be configured to receive the solvent to wash the fibers accommodated therein. After washing, the gaseous phase discharged from the washing unit 10 may be supplied to the solvent collector 30 through the steam collector 20, and the liquid phase discharged from the washing unit 10 may be supplied to the solvent collector 30.

The solvent collector 30 may include the filter unit 31, the moisture eliminator 38, the solvent storage 32, and the solvent supplier 34. The liquid solvent discharged from the washing unit 10 may be supplied to the moisture eliminator 38 after passing through the filter unit 31 and stored in the solvent storage 32. The sensor unit 35 and the second sensor unit 35' are provided in the solvent storage 32 and the moisture eliminator 38, respectively, to measure the moisture content therein.

Referring to FIG. 7, the moisture eliminator 38 may further include a dehumidification cartridge 38b inside the housing 38a. The dehumidification cartridge 38b may be configured to perform separation by adsorbing water from the solvent flowing inside the housing 38a. The dehumidification cartridge 38b may be detachably disposed inside the housing 38a of the moisture eliminator 38. For example, the dehumidification cartridge 38b may be disposed on at least a part of the wall surface of the housing 38a. Although not shown, the housing 38a may be provided to have at least a part of the wall surface, for example, a part of the upper surface opened, and when the part of the wall surface is opened, the dehumidification cartridge 38b or the permeable membrane 38c may be disposed or replaced. For example, the dehumidification cartridge 38b may be disposed to be adjacent to the moisture discharge line 39 and the permeable membrane 38c discharged to the outside OUT based on the permeable membrane 38c. The dehumidification cartridge 38b may be configured to promote the permeation of water molecules through the permeable membrane 38c.

The dehumidification cartridge 38b may be configured to adsorb water through at least one of physical adsorption and chemical adsorption, and the same packing material as that of the adsorption cartridge 32b may be used.

The washing machine 1 according to an example embodiment may further include the solvent return line 36 configured to connect the solvent storage 32 and the moisture eliminator 38, and the controller 40 may be configured to adjust the degree of opening of the solvent return valve 37 in accordance with the moisture content measured by at least one of the sensor unit 35 and the second sensor unit 35' to adjust the flow rate of the solvent supplied to the moisture eliminator 38.

As described above, in Example 2-4, the solvent collected from the washing unit 10 may be stored in the solvent storage 32 after passing through the filter unit 31 and the moisture eliminator 38 and then supplied to the washing unit 10. The moisture eliminator 38 is provided to include both the permeable membrane 38c and the dehumidification cartridge 38b, so that separation efficiency in the permeable membrane 38c may be improved. The controller 40 may be configured to re-supply, to the moisture eliminator, the solvent in the solvent storage 32 according to the information on the moisture content received from at least one of the sensor units 35 and 35' of the solvent storage 32 and the moisture eliminator 38 so as to additionally eliminate moisture.

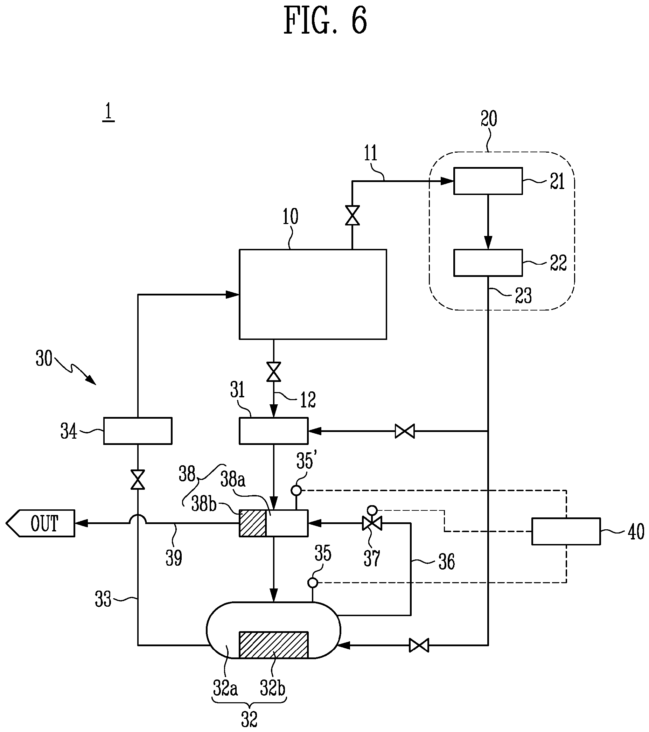

Referring to FIG. 6, the washing machine 1 according to Example 2-5 of the present disclosure includes the washing unit 10, the steam collector 20, the solvent collector 30, and the controller 40, wherein the solvent collector 30 includes the moisture eliminator 38, the solvent storage 32, and the sensor unit 35.

Hereinafter, the Example 2-5 will be mainly described on the points that are different from the previous Example 2-4, and the parts omitted from the description will be replaced with the previous content.

The washing unit 10 may be configured to receive the solvent to wash the fibers accommodated therein. After washing, the gaseous phase discharged from the washing unit 10 may be supplied to the solvent collector 30 after passing through the steam collector 20, and the liquid phase discharged from the washing unit 10 may be supplied to the solvent collector 30.

The solvent collector 30 may include the filter unit 31, the moisture eliminator 38, the solvent storage 32, and the solvent supplier 34. The liquid solvent discharged from the washing unit 10 may be supplied to the moisture eliminator 38 after passing through the filter unit 31 and stored in the solvent storage 32. The sensor unit 35 and the second sensor unit 35' are provided in the solvent storage 32 and the moisture eliminator 38, respectively, to measure the moisture content therein.

The moisture eliminator 38 of the washing machine 1 according to an example embodiment may further include the dehumidification cartridge 38b therein to improve moisture separation efficiency, and the solvent storage 32 may include the solvent storage tank 32a and the adsorption cartridge 32b.

The controller 40 may be configured to adjust the degree of opening of the solvent return valve 37 according to the moisture content measured by at least one of the sensor unit 35 and the second sensor unit 35' to control the flow rate of the solvent supplied to the moisture eliminator 38.

As described above, in Example 2-5, the solvent collected from the washing unit 10 may be stored in the solvent storage 32 after passing through the filter unit 31 and the moisture eliminator 38 and then supplied to the washing unit 10. The moisture eliminator 38 is provided to include both the permeable membrane 38c and the dehumidification cartridge 38b to improve separation efficiency in the permeable membrane 38c, and the solvent storage 32 is provided to include the adsorption cartridge 32b in the solvent storage tank 32a to prevent decomposition due to the storage of the solvent. The controller 40 may be configured to re-supply, to the moisture eliminator 38, the solvent in the solvent storage 32 according to the information on the moisture content received from at least one of the sensor units 35 and 35' of the solvent storage 32 and the moisture eliminator 38 to additionally eliminate moisture.

### Experimental Example 2. Composition identification of the solvent after washing

The washing machines according to Examples and Comparative Examples according to the present disclosure were prepared, and washing was performed under the same conditions. The same type of fibers was put into each washing machine, and a composition including a compound according to the Chemical Formula 1 (wherein R₁ and R₂ are alkyl having 1 carbon atom, and R₃ is hydrogen) was used as a laundry solvent. The composition of the laundry solvent is as shown in Table 1 below.

At the first washing, the solvent was supplied, the washing was performed for 15 minutes, the solvent was collected while undergoing a drying process, another fiber was put into the washing machine, and the collected solvent was re-supplied for washing. 30 times of washing in total were performed in the same way, without replacement of the solvent storage tank or cartridge during the washing process. The composition of the solvent collected in the solvent storage tank after final washing was identified and shown in Table 4 below.

**TABLE 4**

| Component (wt%) | Laundry Solvent | Comparative Example 2-1 | Example 2-1 | Example 2-2 | Example 2-3 | Example 2-4 | Example 2-5 |
|---|---|---|---|---|---|---|---|
| Chemical Formula 1 | 96.0 | 69.0 | 91.4 | 92.7 | 94.1 | 94.9 | 95.5 |
| Acetone | 0.3 | 9.5 | 1.2 | 0.8 | 0.5 | 0.3 | 0.3 |
| Glycerol | 0.4 | 14.6 | 1.2 | 1.1 | 0.7 | 0.5 | 0.4 |
| Water | 3.3 | 6.3 | 5.6 | 4.8 | 4.2 | 4.0 | 3.5 |
| Other components | 0.1 | 0.6 | 0.6 | 0.6 | 0.5 | 0.4 | 0.3 |
| Total | 100.0 | 100.0 | 100.0 | 100.0 | 100.0 | 100.0 | 100.0 |

As shown in Table 4, in Comparative Example 2-1 illustrating the conventional washing machine, it was identified that the compound according to Chemical Formula 1 comparable to approximately 30 wt% was decomposed into acetone and glycerol.

On the other hand, in the washing machine according to an example embodiment of the present disclosure, it was found that only less than 10 wt% of the compound according to Chemical Formula 1 was decomposed even after 30 times of washing. As such, in the washing machine according to an example embodiment of the present disclosure, it was determined that the washing efficiency was maintained by keeping the concentration of the compound according to Chemical Formula 1 high even after the repeated washing, and it was possible to reduce cost due to the reuse of the solvent.

The present disclosure is not limited to example embodiments described above, and it is assured that a combination of the above example embodiments or a combination of at least one of the above example embodiments and a known technology may be included as another example embodiment.

Although the present disclosure has been described in detail through specific example embodiments, it is intended to describe the present disclosure in detail, the present disclosure is not limited thereto, and it will be clear that the modification or improvement is possible by those of ordinary skill in the art within the technical spirit of the present disclosure.

All simple modifications or changes of the present disclosure fall within the scope of the present disclosure, and the specific scope of protection of the present disclosure will become clear by the appended claims.

### <Description of Symbols>

| | |
|---|---|
| 1: Washing machine | 10: Washing unit |
| 11: Steam suction line | 12: Solvent collecting line |
| 20: Steam collector | 21: Steam suction unit |
| 22: Steam condenser | 23: Steam collecting line |
| 30: Solvent collector | 31: Filter unit |
| 32: Solvent storage | 32a: Solvent storage tank |

| | |
|---|---|
| 32b: Adsorption cartridge | 33: Solvent collecting line |
| 34: Solvent supplier | 35: Sensor unit |
| 35': Second sensor unit | 36: Solvent return line |
| 37: Solvent return valve | 38: Moisture eliminator |
| 38a: Housing | 38b: Dehumidification cartridge |
| 38c: Permeable membrane | 39: Moisture discharge line |
| 40: Controller | |

## Claims

1. A laundry composition, comprising a solvent represented by the following Chemical Formula 1 and a fragrance,
wherein the fragrance has a log P value of -1.0 to 4.5, and 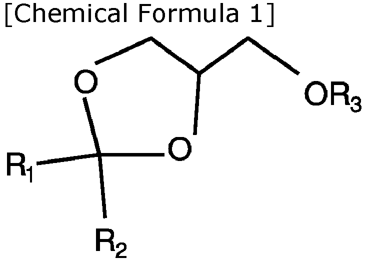
in the Formula,
R₁ and R₂ are each independently hydrogen or a linear or branched alkyl having 1 to 4 carbon atoms, and
R₃ is hydrogen or an alkyl having 1 to 4 carbon atoms.

2. The laundry composition of claim 1, wherein R₁ and R₂ are methyl, and R₃ is hydrogen.

3. The laundry composition of claim 1, wherein the fragrance comprises one or more compounds selected from the group consisting of vanillin, resorcinol, 2,4-dihydroxy-3,6-dimethylbenzoic acid, geraniol, benzylbenzoate, and 2-ethylhexene.

4. The laundry composition of claim 1, wherein the fragrance is included in an amount of 0.0001 to 30 wt% with respect to 100 wt% of the laundry composition.

5. The laundry composition of claim 1, wherein the laundry composition is a liquid composition further comprising one or more additives selected from the group consisting of an organic solvent, a surfactant, an electrolyte, an enzyme, a preservative, and a viscosity modifier.

6. A method of washing fibers using the laundry composition according to any one of claims 1 to 5.

7. A washing machine, comprising:
a washing unit supplied with a solvent and configured to wash fibers accommodated therein;
a steam collector configured to condense a gaseous phase discharged from the washing unit and supply it to a solvent collector; and
the solvent collector configured to collect a liquid phase discharged from the washing unit and supply it to a solvent supplier,
wherein the solvent collector comprises:
a filter unit configured to remove foreign substances from the solvent supplied from at least one of the steam collector and the washing unit; and
a solvent storage configured to store the solvent supplied from the filter unit.

8. The washing machine of claim 7, wherein the steam collector comprises:
a steam suction unit configured to collect steam generated in the washing unit; and
a steam condenser configured to perform heat exchange between steam and water supplied from the steam suction unit.

9. The washing machine of claim 7, wherein the solvent storage comprises:
a solvent storage tank configured to supply the solvent to the solvent supplier; and
a sensor unit configured to measure the content of moisture contained in the solvent storage tank.

10. The washing machine of claim 9, wherein the solvent storage tank comprises an adsorption cartridge detachably disposed inside the solvent storage tank, and
the adsorption cartridge comprises at least one or more of activated carbon, charcoal, silica gel, alumina gel, sulfuric acid, activated clay, zeolite, and bentonite.

11. The washing machine of claim 7, wherein the solvent collector further comprises a moisture eliminator having a permeable membrane,
wherein the permeable membrane is a permeable evaporation membrane, a hollow fiber membrane, or a reverse osmosis membrane, and
the moisture eliminator is configured to supply the solvent that passed through the permeable membrane to the solvent supplier or the solvent storage.

12. The washing machine of claim 11, wherein the moisture eliminator comprises an adsorption cartridge detachably disposed inside the moisture eliminator, and
the adsorption cartridge is disposed to be in contact with the solvent that passed through the permeable membrane.

13. The washing machine of claim 12, wherein the moisture eliminator comprises a second sensor unit configured to measure the content of moisture contained in the moisture eliminator, and
the washing machine further comprises:
a solvent return line configured to supply the solvent stored in the solvent storage tank to the moisture eliminator;
a solvent return valve provided on the solvent return line to control a supply flow rate of the solvent; and
a controller configured to adjust a degree of opening of the solvent return valve according to the moisture content measured by at least one of the sensor unit and the second sensor unit.

14. The washing machine of claim 13, wherein the controller is configured to open the solvent return valve or increase the degree of opening thereof when the moisture content measured by the sensor unit is greater than a predetermined first reference value or the moisture content measured by the second sensor unit is less than a predetermined second reference value.

15. The washing machine of claim 7, wherein the solvent comprises a compound represented by the following Chemical Formula 1, and 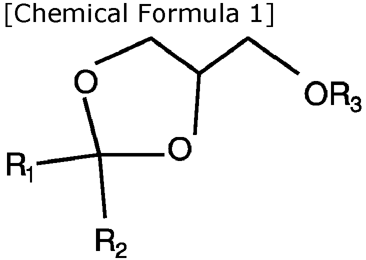
in the Formula,
R₁ and R₂ are each independently hydrogen or a linear or branched alkyl having 1 to 4 carbon atoms, and
R₃ is hydrogen or an alkyl having 1 to 4 carbon atoms.
